# EUROPÄISCHE PATENTSCHRIFT

(11) **EP 4 145 238 B1**
(45) Veröffentlichungstag und Bekanntmachung des Hinweises auf die Patenterteilung: **25.12.2024**
(21) Anmeldenummer: 22190251.3
(22) Anmeldetag: 12.08.2022
(51) Int. Cl.: G05D 1/00

(54) **VERFAHREN ZUM STEUERN EINES UNBEMANNTEN FLUGGERÄTS FÜR EINEN INSPEKTIONSFLUG ZUM INSPIZIEREN EINES OBJEKTS UND UNBEMANNTES INSPEKTIONSFLUGGERÄT**
METHOD FOR CONTROLLING AN UNMANNED AERIAL VEHICLE FOR AN INSPECTION FLIGHT FOR INSPECTING AN OBJECT, AND UNMANNED INSPECTION AERIAL VEHICLE
PROCÉDÉ DE COMMANDE D'UN VÉHICULE AÉRIEN SANS PILOTE POUR UN VOL D'INSPECTION SERVANT À INSPECTER UN OBJET ET VÉHICULE AÉRIEN D'INSPECTION SANS PILOTE

(30) Priorität: 07.09.2021 DE 102021123124
(43) Veröffentlichungstag der Anmeldung: 08.03.2023
(73) Patentinhaber: Spleenlab GmbH, 07929 Saalburg-Ebersdorf (DE)
(72) Erfinder: Ölsner, Florian, 07743 Jena (DE); Lewandowski, Benjamin, 99099 Erfurt (DE); Hagen, Chris, 07356 Bad Lobenstein (DE); Ammapalayam Ravichandran, Ashwanth, 07356 Bad Lobenstein (DE); Milz, Dr. Stefan, 07929 Saalburg-Ebersdorf (DE)
(74) Vertreter: Bittner, Thomas L.

(56) Entgegenhaltungen:
- WO-A1-2018/195955
- US-A1- 2016 292 869
- US-A1- 2021 263 515

## Beschreibung

Die Erfindung betrifft ein Verfahren zum Steuern eines unbemannten Fluggeräts für einen Inspektionsflug zum Inspizieren eines Objekts sowie ein unbemanntes Inspektionsfluggerät.

### Hintergrund

Unbemannte Fluggeräte können verwendet werden, um Objekte zu inspizieren, beispielsweise Gebäude, Mobilfunktürme, Windkraftanlagen oder dergleichen. Die Flugbewegung oder -bahn des Fluggeräts wird hierbei mit Hilfe einer Steuereinrichtung gesteuert, welche Steuersignale bereitstellt, um zum Beispiel Antriebseinrichtungen und Ruder zu steuern. Hierbei ist es bekannt, beim Bestimmen der Steuersignale für die Flugbewegung des Fluggeräts Sensorsignale einer Sensoreinrichtung zu berücksichtigen, die Umgebungsparameter für die Umgebung des Fluggeräts anzeigen, und die Flugbewegung in Abhängigkeit solcher Sensorsignale auszuführen.

Aus dem Dokument DE 10 2017 205 647 A1 ist ein Verfahren zum Bestimmen eines Pfades entlang eines Objekts bekannt. Das Verfahren umfasst einen Schritt "Bestimmen eines Referenzpunktes des Objekts in absoluten Koordinaten", einen Schritt "Ermitteln einer Menge von Punkten des Objekts in absoluten Koordinaten basierend auf weiteren Punkten des Objekts in einem relativen Koordinatensystem, wobei die Umrechnung der weiteren Punkte des Objekts in das absolute Koordinatensystem basierend auf dem Referenzpunkts des Objekts erfolgt" und einen Schritt "Bestimmen des Pfads entlang des Objekts basierend auf der Menge von Punkten des Objekts, so dass der Pfad beabstandet von dem Objekt verläuft".

Das Dokument US 10,527,423 B1 beschreibt ein System und ein Verfahren zur autonomen Lokalisierung eines Boden-, Oberflächen- oder Luftfahrzeugs in Bezug auf eine Oberfläche mit komplexer Form. Die Lokalisierung erfolgt über ein Optical-Flow-Verfahren. Erfasste optische (elektro-optische, infrarote, thermische) Bilder werden durch Tiefendaten ergänzt, also Entfernung von dem Abstandssensor zu Punkten auf dem erfassten Oberflächenobjekt. Eine Modifikation des optischen Flussverfahrens wird auf eine Folge von Frames angewendet, die auf diese Weise erhalten werden, um die Verschiebung des Fahrzeugs in Bezug auf das Oberflächenobjekt zu berechnen.

US 2021/263515 A1 offenbart, dass ein unbemanntes Luftfahrzeug (UAV) einen oder mehrere Bildsensoren verwendet, um Bilder eines Scanziels zu erfassen. Es kann Entfernungsinformationen aus den Bildern verwenden, um jeweilige Standorte im dreidimensionalen Raum (3D) zu bestimmen. Raum einer Vielzahl von Punkten eines 3D-Modells, das eine Oberfläche des Scanziels darstellt. Das UAV kann ein erstes Bild mit einem zweiten Bild vergleichen, um einen Unterschied zwischen einer aktuellen Referenzrahmenposition für das UAV und einer Schätzung einer tatsächlichen Referenzrahmenposition für das UAV zu bestimmen. Darüber hinaus kann das UAV, zumindest auf der Grundlage der Differenz, während des Flugs des UAV eine Aktualisierung des 3D-Modells ermitteln, einschließlich mindestens eines von einem aktualisierten Standort von mindestens einem Punkt im 3D-Modell oder einem Standort von einem neuer Punkt im 3D-Modell.

### Zusammenfassung

Aufgabe der Erfindung ist es, ein Verfahren zum Steuern eines unbemannten Fluggeräts für einen Inspektionsflug zum Inspizieren eines Objekts sowie ein unbemanntes Inspektionsfluggerät anzugeben, mit denen eine weitgehende Automatisierung bis hin zum vollautomatischen Durchführen des Inspektionsflugs ermöglicht ist.

Zur Lösung ist ein Verfahren zum Steuern eines unbemannten Fluggeräts für einen Inspektionsflug zum Inspizieren eines Objekts nach dem unabhängigen Anspruch 1 geschaffen. Weiterhin ist ein unbemanntes Inspektionsfluggerät nach dem nebengeordneten Anspruch 9 geschaffen. Ausgestaltungen sind Gegenstand von abhängigen Ansprüchen.

Nach einem Aspekt ist ein Verfahren zum Steuern eines unbemannten Fluggeräts für einen Inspektionsflug zum Inspizieren eines Objekts geschaffen, bei dem Folgendes vorgesehen ist: Erfassen von Bilddaten für ein Objekt mittels einer Kameraeinrichtung, die an einem unbemannten Fluggerät angeordnet ist, während einer ersten Flugbewegung des unbemannten Fluggeräts in einem Flugkoordinatensystem in der Nähe des Objekts und Erfassen von Tiefendaten mittels einer Tiefensensoreinrichtung, die an dem unbemannten Fluggerät angeordnet ist, wobei die Tiefendaten Abstände zwischen dem unbemannten Fluggerät und dem Objekt während der ersten Flugbewegung anzeigen. Beim Verarbeiten der Bilddaten und der Tiefendaten mittels einer Auswerteeinrichtung ist Folgendes vorgesehen: Ausführen einer auf künstlicher Intelligenz basierenden Bildanalyse für die Bilddaten, wobei hierbei aus den Bilddaten mit Hilfe von auf künstlicher Intelligenz basierender Bilderkennung das Objekt erkannt wird und für Bildpixel, die dem erkannten Objekt zugeordnet werden, Pixelkoordinaten in einem Kamerakoordinatensystem der Kameraeinrichtung bestimmt werden; Ausführen einer Sensordatenfusion für die Bilddaten und die Tiefendaten, wobei hierbei den Bildpixeln des Objekts jeweils zuordenbaren Tiefendaten bestimmt werden und aus den zugeordneten Tiefendaten mindestens einen Objektbezugspunkt für das Objekt bestimmt wird; und Bestimmen von Positionskoordinaten für den mindestens einen Objektbezugspunkt in dem Flugkoordinatensystem, wobei die Positionskoordinaten eine Position des Objekts in dem Flugkoordinatensystem anzeigen. Sodann sieht das Verfahren weiterhin Folgendes vor: Bestimmen von Flugbahnkoordinaten für das unbemannte Fluggerät für einen in Bezug auf das Objekt kollisionsvermeidenden Inspektionsflug zum Inspizieren des Objekts unter Berücksichtigung der Positionskoordinaten für den mindestens einen Objektbezugspunkt und Steuern des unbemannten Fluggeräts während einer zweiten Flugbewegung, derart, dass das unbemannte Fluggerät hierbei den kollisionsvermeidenden Inspektionsflug den Flugbahnkoordinaten entsprechend ausführt, durch eine Steuereinrichtung des unbemannten Fluggeräts.

Nach einem weiteren Aspekt ist ein unbemanntes Inspektionsfluggerät geschaffen, welches eine Kameraeinrichtung, eine Tiefensensoreinrichtung, eine Auswerteeinrichtung, die ein oder mehrere für eine Datenverarbeitung eingerichtete Prozessoren aufweist; und eine Steuereinrichtung aufweist, die eingerichtet ist, einen Betrieb des unbemannten Inspektionsfluggeräts zu steuern. Das Inspektionsfluggerät ist zum Ausführen eines Inspektionsflugs zum Inspizieren eines Objekts für Folgendes eingerichtet ist: Erfassen von Bilddaten für ein Objekt mittels der Kameraeinrichtung, die an einem unbemannten Fluggerät angeordnet ist, während einer ersten Flugbewegung des unbemannten Fluggeräts in einem Flugkoordinatensystem in der Nähe des Objekt; Erfassen von Tiefendaten mittels der Tiefensensoreinrichtung, die an dem unbemannten Fluggerät angeordnet ist, wobei die Tiefendaten Abstände zwischen dem unbemannten Fluggerät und dem Objekt während der ersten Flugbewegung anzeigen. Das Verarbeiten der Bilddaten und der Tiefendaten mittels der Auswerteeinrichtung sieht hierbei Folgendes vor: Ausführen einer auf künstlicher Intelligenz basierenden Bildanalyse für die Bilddaten, wobei hierbei aus den Bilddaten mit Hilfe von auf künstlicher Intelligenz basierender Bilderkennung das Objekt erkannt wird und für Bildpixel, die dem erkannten Objekt zugeordnet werden, Pixelkoordinaten in einem Kamerakoordinatensystem der Kameraeinrichtung bestimmt werden; Ausführen einer Sensordatenfusion für die Bilddaten und die Tiefendaten, wobei hierbei den Bildpixeln des Objekts jeweils zuordenbaren Tiefendaten bestimmt werden und aus den zugeordneten Tiefendaten mindestens einen Objektbezugspunkt für das Objekt bestimmt wird; und Bestimmen von Positionskoordinaten für den mindestens einen Objektbezugspunkt, wobei die Positionskoordinaten eine Position des Objekts in dem Flugkoordinatensystem anzeigen. Weiterhin ist das Inspektionsfluggerät zum Ausführen des Inspektionsflugs für Folgendes eingerichtet: Bestimmen von Flugbahnkoordinaten für das unbemannte Fluggerät in dem Flugkoordinatensystem für einen in Bezug auf das Objekt kollisionsvermeidenden Inspektionsflug zum Inspizieren des Objekts unter Berücksichtigung der Positionskoordinaten für den mindestens einen Objektbezugspunkt und Steuern des unbemannten Fluggeräts während einer zweiten Flugbewegung, derart, dass das unbemannte Fluggerät hierbei den kollisionsvermeidenden Inspektionsflug den Flugbahnkoordinaten entsprechend ausführt, durch die Steuereinrichtung des unbemannten Fluggeräts.

Für das Ausführen des Inspektionsflugs zum Inspizieren eines beliebigen Objekts, zum Beispiel eines Gebäudes, eines Turmes, einer Windkraftanlage oder dergleichen werden im Verlauf einer ersten Flugbewegung des unbemannten Fluggeräts Bilddaten für das Objekt und Tiefendaten erfasst, die unter Verwendung künstlicher Intelligenz mittels einer Bildanalyse ausgewertet werden, um das Objekt zu erkennen oder zu bestimmen, so dass schließlich Positionskoordinaten für eine Position des Objekts in dem Flutkoordinatensystem ermittelt werden, wobei hierbei weitere Messdaten einer Inertialmesseinrichtung und eines Positionsbestimmungssystems des Fluggeräts einbezogen werden können. Solche Positionskoordinaten können für ein oder mehrere Objektbezugspunkte (Bezugspunkte am Objekt) bestimmt werden. Hierauf kann dann eine Flugbahn oder -bewegung für den Inspektionsflug des unbemannten Fluggeräts zum Inspizieren des Objekts bestimmt werden, indem entsprechende Flugbahnkoordinaten ermittelt werden. Basierend auf diesen Flugbahnkoordinaten steuert die Steuereinrichtung des unbemannten Fluggeräts den kollisionsvermeidenden Inspektionsflug zum Inspizieren des Objekts (zweite Flugbewegung). Die Position des zu inspizierenden Objekts wird auf diese Weise unter Verwendung künstlicher Intelligenz automatisiert bestimmt, um dann in Abhängigkeit hiervon den Inspektionsflug auszuführen. Es bedarf insbesondere keines ersten handgesteuerten Überflugs des zu inspizierenden Objekts, um dessen Position für eine anschließende Flugbahnbestimmung manuelle zu ermitteln, wie dies im Stand der Technik vorgesehen ist.

Der mindestens eine Objektbezugspunkt kann einem Objektpunkt des Objekts entsprechend bestimmt werden, für den aus den zugeordneten Tiefendaten ein mittlerer Abstand zwischen dem unbemannten Fluggerät und dem Objekt bestimmt wird. Bei dieser Ausführungsform ist vereinfachend eine Ausgestaltung vorgesehen, bei der eine gemittelte Position für das zu inspizierende Objekt bestimmt und die Flugbewegung beim Inspektionsflug im Bezug hierauf gesteuert wird.

Beim Verarbeiten der Bilddaten und / oder der Tiefendaten kann ein dreidimensionales Modell für das Objekt bestimmt werden. Basierend auf erfassten Bilddaten und Tiefendaten, die wahlweise durch weitere Sensordaten ergänzt werden können, wird ein dreidimensionales (Computer-)Modell für das Objekt mittels der Auswerteeinrichtung des unbemannten Fluggeräts bestimmt, wobei wahlweise auf ergänzende Informationen und / oder Datenverarbeitungskapazität aus einer zentralen Servereinrichtung mittels drahtloser Datenkommunikation zurückgegriffen werden kann. Das betrifft beispielsweise konstruktive Daten für den Aufbau des Objekts, zum Beispiel ein CAD-Modell oder eine CAD-Zeichnung, nachdem das Objekt mit Hilfe der auf künstlicher Intelligenz basierenden Bildanalyse erkannt oder bestimmt wurde.

Das Bestimmen des dreidimensionalen Modells für das Objekt kann während der ersten Flugbewegung zumindest begonnen werden, wahlweise auch abschließend durchgeführt werden.

Hierbei werden schon während der ersten Flugbewegung wenigstens Teile des dreidimensionalen Modells für das Objekt bestimmt. Wahlweise können diese Informationen über das dreidimensionale Modell für die Ausführung der ersten Flugbewegung, die insbesondere der Positionsbestimmung des Objekts dient, berücksichtigt werden, beispielsweise zur Vermeidung einer Kollision mit dem Objekt.

Das Bestimmen des dreidimensionalen Modells für das Objekt kann zumindest teilweise während der zweiten Flugbewegung ausgeführt werden, also insbesondere während des Inspektionsflugs selbst. Die zweite Flugbewegung, welche in kollisionsvermeidenden Inspektionsflug umfasst oder von diesem gebildet wird, kann alternativ oder ergänzend dazu genutzt werden, das dreidimensionale Modell des Objekts zu bestimmen, derart, dass während der zweiten Flugbewegung zum Beispiel weitere Bilddaten und / oder zusätzliche Sensorsignaldaten erfasst und zum Bestimmen des dreidimensionalen Modells und / oder dessen Verfeinerung oder Ergänzung herangezogen werden.

Das dreidimensionale Modell kann für das Objekt während des Ausführens der ersten und / oder der zweiten Flugbewegung durch das unbemannte Fluggerät in Echtzeit bestimmt werden.

Bei dem Verfahren kann ergänzend mindestens einer der folgenden Schritte kann vorgesehen sein: Bestimmen der Flugbahnkoordinaten unter Berücksichtigung des dreidimensionalen Modells für das Objekt; und Bestimmen von aktualisierten Flugbahnkoordinaten unter Berücksichtigung des dreidimensionalen Modells für das Objekt ausgehend von den Flugbahnkoordinaten während des kollisionsvermeidenden Inspektionsflugs. Nach einer Ausführungsform wird das dreidimensionale Modell des Objekts berücksichtigt, wenn die Flugbahnkoordinaten für den Inspektionsflug bestimmt werden, beispielsweise dahingehend, dass die Flugbahnkoordinaten in Bezug auf das dreidimensionale Modell derart bestimmt werden, dass eine Kollision zwischen unbemanntem Fluggerät und Objekt vermieden wird. Alternativ oder ergänzend kann vorgesehen sein, das dreidimensionale Modell für eine Aktualisierung oder Korrektur der ursprünglich bestimmten Flugbahnkoordinaten heranzuziehen, während der Inspektionsflug ausgeführt wird, beispielsweise zur verbesserten Kollisionsvermeidung und / oder zum Anpassen oder Optimieren der Flugbahn für den Inspektionsflug, zum Beispiel zum Inspizieren von Detailbereichen des Objekts.

Beim Bestimmen der Positionskoordinaten für den mindestens einen Objektbezugspunkt kann Folgendes vorgesehen sein: Erfassen von Inertialmessdaten mittels eines Inertialmesseinrichtung, die an dem unbemannten Fluggerät angeordnet ist; Erfassen von Positionsdaten mittels einer Positionsbestimmungseinrichtung, die an dem unbemannten Fluggerät angeordnet ist, wobei die Positionsdaten eine Position des unbemannten Fluggeräts in dem Flugkoordinatensystem anzeigen; und Bestimmen der Positionskoordinaten für den mindestens einen Objektbezugspunkt basierend auf den Inertialmessdaten und den Positionsdaten. Die Inertialmesseinrichtung kann beispielsweise ein oder mehrere Beschleunigungssensoren sowie ein oder mehrere Drehratensensoren aufweisen. Die Positionsbestimmungseinrichtung kann beispielsweise mit einer GPS-Einrichtung gebildet sein.

Die Tiefendaten werden mittels mindestens einer an dem unbemannten Fluggerät angeordneten Tiefensensoreinrichtung aus der folgenden Gruppe erfasst: Lidar-Messeinrichtung, Time-of-Flight-Messeinrichtung und Radar-Messeinrichtung. Die Tiefensensoreinrichtung kann mit Hilfe einer oder mehrerer solcher Messeinrichtungen ausgebildet sein. Hierbei ist die Lidar-Messeinrichtung aufgrund von Reichweite und Intensität für Außenbefliegungen des Objekts ("Outdoor") vorteilhaft, wenn große Reichweiten erzielt werden müssen, zum Beispiel beim Befliegen einer Windkraftanlage oder dergleichen. Die Time-of-Flight-Messeinrichtung wie auch Stereo-Kameras weisen häufig ein eher geringes Gewicht auf und sind daher für eine Indoor-Objektinspektion vorteilhaft nutzbar, da hier das Fluggerät oftmals kleiner ist und nur eine geringere Last tragen kann.

Die vorangehend im Zusammenhang mit dem Verfahren beschriebenen Ausgestaltungen können in Verbindung mit dem unbemannten Inspektionsfluggerät entsprechend vorgesehen sein.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische Darstellung einer Anordnung von funktionellen Komponenten oder Einrichtungen eines unbemannten Fluggeräts und
- Fig. 2: eine schematische Darstellung für ein Verfahren zum Steuern eines unbemannten Fluggeräts für einen Inspektionsflug zum Inspizieren eines Objekts.

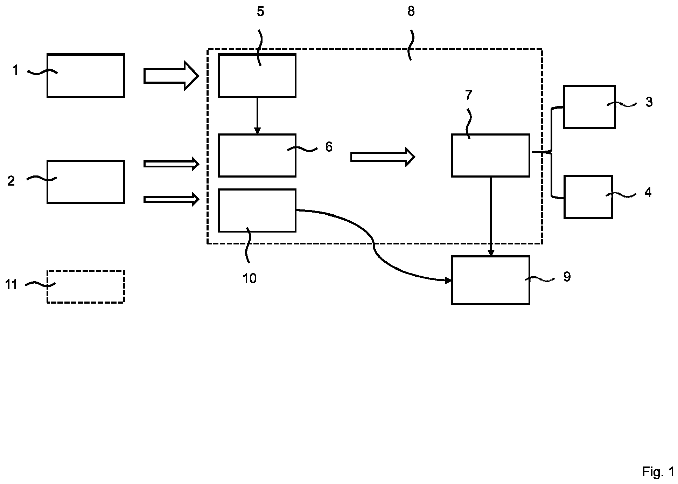

Fig. 1 zeigt eine schematische Darstellung einer Anordnung von funktionellen Komponenten oder Einheiten eines unbemannten Fluggeräts (UAV - Unmanned Aerial Vehicle). Es handelt es sich hierbei um ein Luftfahrzeug, beispielweise eine Drohne, das ohne eine an Bord befindliche Besatzung autark betrieben wird und navigiert. Solche unbemannten Fluggeräte oder Luftfahrzeuge werden zum Beispiel eingesetzt, um beliebige Objekte zu inspizieren, beispielsweise Gebäude, Türme wie Funktürme oder dergleichen. Zu diesem Zweck weist das unbemannte Fluggerät insbesondere dem jeweiligen Anwendungszweck angepasst Mess- oder Sensoreinrichtungen auf, um beim Inspektionsflug die für die durchzuführende Inspektionsaufgabe geeigneten Sensorsignale und Messdaten zu erfassen. Hierzu gehört es beispielsweise, Bildaufnahmen für Abschnitte des zu inspizierenden Objekts und / oder das Objekt insgesamt zu erfassen. Aber auch eine Messung von elektrischen Feldern in der Nähe von Abschnitten des Objekts kann eine Inspektionsaufgabe sein. Das unbemannte Fluggerät kann hierfür bedarfsgerecht mit gewünschten Mess- und Sensoreinrichtungen ausgestattet werden, die auch austauschbar oder wechselbar am Fluggerät angeordnet sein können.

Gemäß Fig. 1 weist die beispielhafte Anordnung für das unbemannte Fluggerät, zum Beispiel eine Drohne, eine Kameraeinrichtung 1, eine Tiefensensoreinrichtung 2, eine Inertialmesseinrichtung 3 sowie ein Positionsbestimmungssystem 4 auf. Mit Hilfe der Kameraeinrichtung 1 werden Bilddaten erfasst, insbesondere für ein zu inspizierendes oder zu untersuchendes Objekt, wahlweise auch für dessen Umgebung. Die Tiefensensoreinrichtung 2 dient insbesondere dazu, zu den Bildaufnahmen Tiefendaten zu bestimmen. Die Tiefensensoreinrichtung 2 umfasst hierfür eine oder mehrere der folgenden Messeinrichtungen: Lidar-Messeinrichtung, Time-of-Flight-Messeinrichtung und Radar-Messeinrichtung.

Die Inertialmesseinrichtung 3 kann insbesondere mit Beschleunigungssensoren und Drehratensensoren (gyroskopische Sensoren) ausgestattet sein, um Messdaten für eine räumliche Lage des unbemannten Fluggeräts zu erfassen. Mit Hilfe des Positionsbestimmungssystems 4 kann die Position des unbemannten Fluggeräts in einem Koordinatensystem bestimmt werden, welches das Flugkoordinatensystem für die Flugbewegungen des unbemannten Fluggerätes bildet, beispielsweise das GPS-System.

Mit Hilfe einer Bilddatenauswerteeinrichtung 5 werden die erfassten Bilddaten verarbeitet, wobei hierbei unter Verwendung künstlicher Intelligenz eine Objekterkennung für das zu inspizierende Objekt ausgeführt wird. Hierzu sind zum Ausführen der künstlichen Intelligenz verwendete und mittels Software-Applikation(en) implementierte Algorithmen Verfahren oder Modelle vorab trainiert, um dann das Objekt zu erkennen (zu bestimmen).

Mit Hilfe einer Sensordatenfusionseinrichtung 6 werden die mittels der Kameraeinrichtung 1 erfassten Bilddaten und die mittels der Tiefensensoreinrichtung 2 erfassten Tiefendaten fusioniert, derart, dass Bildpixeln jeweils Tiefendaten zugeordnet werden.

Mittels einer Objektlokalisierungseinrichtung 7, die Teil einer Auswerteeinrichtung 8 ist, wird in dem Flugkoordinatensystem unter Verwendung der fusionierten Sensordaten sowie der von der Inertialmesseinrichtung 3 sowie dem Positionsbestimmungssystem 4 erhaltenen Messdaten eine Position für das zu beobachtende oder zu inspizierende Objekt bestimmt.

Ausgehend von den für das Objekt bestimmten Positionsdaten wird eine Flugbahn für den Inspektionsflug des unbemannten Fluggeräts bestimmt, um basierend hierauf mittels einer Steuereinrichtung 9 des unbemannten Fluggeräts dessen Flug zur Inspektion zu steuern. Wahlweise kann hierbei auf ein zwei- oder dreidimensionales Modell des Objekts und / oder der zugeordneten Objektumgebung zurückgegriffen werden, welches mit Hilfe einer Modellbestimmungseinrichtung 10 ausgehend von den Bilddaten und den Tiefendaten bereitgestellt wird.

Wahlweise können eine oder mehrere weitere Sensor- oder Messeinrichtungen vorgesehen sein.

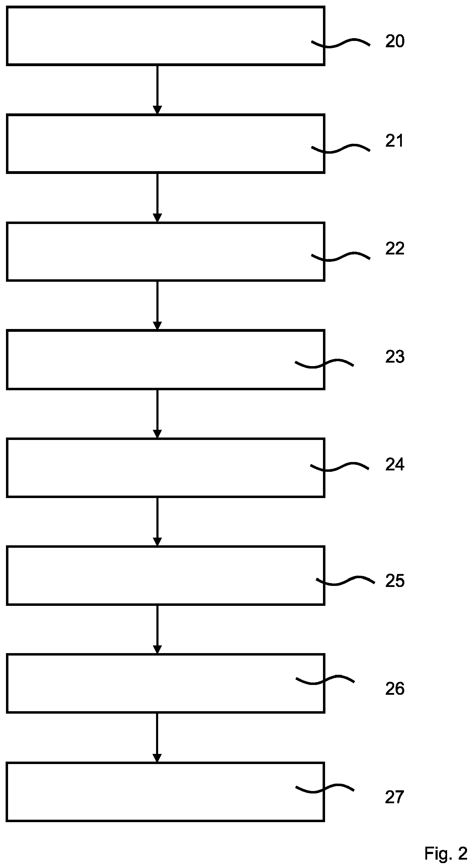

Gemäß der schematischen Darstellung in Fig. 2 kann mit Hilfe der Anordnung aus Fig. 1 ein Verfahren zum Steuern des unbemannten Fluggeräts für einen Inspektionsflug zum Inspizieren des Objekts wie folgt ausgeführt werden. Mit Hilfe der Kameraeinrichtung 1 werden im Schritt 20 Bilddaten für das zu inspizierende Objekt während einer ersten Flugbewegung des unbemannten Fluggeräts in dem Flugkoordinatensystem in der Nähe des Objekts erfasst. Im Schritt 21, der zumindest teilweise zeitgleich mit dem Erfassen der Bilddaten ausgeführt wird, werden mittels der Tiefensensoreinrichtung 2 Tiefendaten erfasst, die Abstände zwischen dem unbemannten Fluggerät und dem zu inspizierenden Objekt während der ersten Flugbewegung anzeigen. Während der ersten Flugbewegung, die der Vorbereitung des anschließenden Inspektionsflugs dient, werden weiterhin Messdaten mittels der Inertialmesseinrichtung 3 sowie des Positionsbestimmungssystems 4 erfasst (Schritte 22, 23).

Mit Hilfe der Auswerteeinrichtung 8 werden die Bilddaten und wahlweise die Tiefendaten verarbeitet (Schritt 24), was das Ausführen einer Bildanalyse für die Bilddaten unter Verwendung künstlicher Intelligenz umfasst, wobei hierbei aus den Bilddaten mit Hilfe von auf künstliche Intelligenz basierender Bilderkennung das Objekt erkannt wird und für Bildpixel, die dem erkannten Objekt zugeordnet werden, Pixelkoordinaten in einem Kamerakoordinatensystem der Kameraeinrichtung 1 bestimmt werden. Mit Hilfe der Sensordatenfunktionseinrichtung 6 wird im Schritt 25 eine Sensordatenfusion für die Bilddaten und die Tiefendaten ausgeführt, wobei hierbei den Bildpixeln des Objekts jeweils zuordenbare Tiefendaten bestimmt werden. Aus den zugeordneten Tiefendaten wird mindestens ein Objektbezugspunkt für das Objekt bestimmt, beispielsweise ein Objektpunkt, welcher einen mittleren Wert der Tiefendaten (Abstände) entspricht.

Die mittels der Sensordatenfusionseinrichtung 6 fusionierten Daten werden im schritt 26 mittels der Objektlokalisierungseinrichtung 7 in der Auswerteeinrichtung 8 zusammen mit den Messdaten von der Inertialmesseinrichtung 3 und dem Positionsbestimmungssystem 4 verarbeitet, um Positionskoordinaten für den mindestens einen Objektbezugspunkt in dem Flugkoordinatensystem zu bestimmen, wobei die Positionskoordinaten die Position des Objekts in dem Flugkoordinatensystem anzeigen. Hierdurch wird auf automatisierte Art und Weise die Position des nachfolgend zu inspizierenden Objekts in dem Flugkoordinatensystem bestimmt, bei dem es sich beispielsweise um das GPS-System handelt. Manuelle Schritte, wie sie im Stand der Technik vorgesehen sind, um vor einem Inspektionsflug zunächst die Position des Objekts zu erfassen, werden eingespart.

Auf Basis der Kenntnis der Position des zu inspizierenden Objekts wird in dem Flugkoordinatensystem eine Flugbahn für den Inspektionsflug bestimmt (Schritt 27), um anschließend mit Hilfe der Steuereinrichtung 9 das unbemannte Fluggerät für den Inspektionsflug zu steuern, insbesondere zur Vermeidung irgendwelcher Kollisionen mit dem Objekt selbst.

Optional kann vorgesehen sein, während des vorbereiteten Flugs und / oder während des eigentlichen Inspektionsflugs erfasste Messdaten, insbesondere die von der Kameraeinrichtung 1 und der Tiefensensoreinrichtung 2 erfassten Daten, zu nutzen, um ein zwei- oder dreidimensionales Modell für das Objekt und wahlweise seiner nächsten Umgebung in der Auswerteeinrichtung 8 zu bestimmen. Das so erstellte Modell kann ergänzend herangezogen werden, um die Flugbahn für den Inspektionsflug zu bestimmen. Ein ursprünglich erstelltes Modell kann während des Inspektionsflugs auf Basis der dann erfassten Messdaten angepasst oder optimiert werden. Das erstellte zwei- oder dreidimensionales Modell dient als Grundlage, um mögliche Kollisionen vorherzusehen und gegebenenfalls die Planung während des Fluges zu optimieren.

## Patentansprüche

1. Verfahren zum Steuern eines Inspektionsflugs eines unbemannten Fluggeräts zum Inspizieren eines Objekts, mit
- Erfassen von Bilddaten für ein Objekt mittels einer Kameraeinrichtung (1), die an einem unbemannten Fluggerät angeordnet ist, während einer ersten Flugbewegung des unbemannten Fluggeräts in einem Flugkoordinatensystem in der Nähe des Objekts;
- Erfassen von Tiefendaten mittels einer Tiefensensoreinrichtung (2), die an dem unbemannten Fluggerät angeordnet ist und die eine Lidar-Messeinrichtung, Time-of-Flight-Messeinrichtung und/oder Radar-Messeinrichtung umfasst, wobei die Tiefendaten Abstände zwischen dem unbemannten Fluggerät und dem Objekt während der ersten Flugbewegung anzeigen;
- Verarbeiten der Bilddaten und der Tiefendaten mittels einer Auswerteeinrichtung (8), aufweisend:
- Ausführen einer auf künstlicher Intelligenz basierenden Bildanalyse für die Bilddaten, wobei hierbei aus den Bilddaten mit Hilfe von auf künstlicher Intelligenz basierender Bilderkennung das Objekt erkannt wird und für Bildpixel, die dem erkannten Objekt zugeordnet werden, Pixelkoordinaten in einem Kamerakoordinatensystem der Kameraeinrichtung (1) bestimmt werden;
- Ausführen einer Sensordatenfusion für die Bilddaten und die Tiefendaten, wobei hierbei den Bildpixeln des Objekts jeweils zuordenbaren Tiefendaten bestimmt werden und aus den zugeordneten Tiefendaten mindestens einen Objektbezugspunkt für das Objekt bestimmt wird; und
- Bestimmen von Positionskoordinaten für den mindestens einen Objektbezugspunkt in dem Flugkoordinatensystem, wobei die Positionskoordinaten eine Position des Objekts in dem Flugkoordinatensystem anzeigen;
- Bestimmen von Flugbahnkoordinaten für das unbemannte Fluggerät für einen in Bezug auf das Objekt kollisionsvermeidenden Inspektionsflug zum Inspizieren des Objekts unter Berücksichtigung der Positionskoordinaten für den mindestens einen Objektbezugspunkt; und
- Steuern des unbemannten Fluggeräts während einer zweiten Flugbewegung, derart, dass das unbemannte Fluggerät hierbei den kollisionsvermeidenden Inspektionsflug den Flugbahnkoordinaten entsprechend ausführt, durch eine Steuereinrichtung (9) des unbemannten Fluggeräts.

2. Verfahren nach Anspruch 1, **dadurch gekennzeichnet, dass** der mindestens eine Objektbezugspunkt einem Objektpunkt des Objekts entsprechend bestimmt wird, für den aus den zugeordneten Tiefendaten ein mittlerer Abstand zwischen dem unbemannten Fluggerät und dem Objekt bestimmt wird.

3. Verfahren nach Anspruch 1 oder 2, **dadurch gekennzeichnet, dass** beim Verarbeiten der Bilddaten und / oder der Tiefendaten ein dreidimensionales Modell für das Objekt bestimmt wird.

4. Verfahren nach Anspruch 3, **dadurch gekennzeichnet, dass** das Bestimmen des dreidimensionalen Modells für das Objekt während der ersten Flugbewegung zumindest begonnen wird.

5. Verfahren nach Anspruch 3 oder 4, **dadurch gekennzeichnet, dass** das Bestimmen des dreidimensionalen Modells für das Objekt zumindest teilweise während der zweiten Flugbewegung ausgeführt wird.

6. Verfahren nach mindestens einem der Ansprüche 3 bis 5, dadurch **gekennzeich- net,** dass das dreidimensionalen Modell für das Objekt während des Ausführens der ersten und / oder der zweiten Flugbewegung durch das unbemannte Fluggerät in Echtzeit bestimmt wird.

7. Verfahren nach mindestens einem der Ansprüche 3 bis 6, dadurch **gekennzeich- net,** dass mindestens einer der folgenden Schritte vorgesehen ist:
- Bestimmen der Flugbahnkoordinaten unter Berücksichtigung des dreidimensionalen Modells für das Objekt; und
- Bestimmen von aktualisierten Flugbahnkoordinaten unter Berücksichtigung des dreidimensionalen Modells für das Objekt ausgehend von den Flugbahnkoordinaten während des kollisionsvermeidenden Inspektionsflugs.

8. Verfahren nach mindestens einem der vorangehenden Ansprüche, dadurch **gekenn- zeichnet,** dass beim Bestimmen der Positionskoordinaten für den mindestens einen Objektbezugspunkt Folgendes vorgesehen ist:
- Erfassen von Inertialmessdaten mittels eines Inertialmesseinrichtung (3), die an dem unbemannten Fluggerät angeordnet ist;
- Erfassen von Positionsdaten mittels einer Positionsbestimmungseinrichtung (4), die an dem unbemannten Fluggerät angeordnet ist, wobei die Positionsdaten eine Position des unbemannten Fluggeräts in dem Flugkoordinatensystem anzeigen; und
- Bestimmen der Positionskoordinaten für den mindestens einen Objektbezugspunkt basierend auf den Inertialmessdaten und den Positionsdaten.

9. Unbemanntes Inspektionsfluggerät, mit
- einer Kameraeinrichtung (1);
- einer Tiefensensoreinrichtung (2);
- einer Auswerteeinrichtung (8), die ein oder mehrere für eine Datenverarbeitung eingerichtete Prozessoren aufweist; und
- einer Steuereinrichtung (9), die eingerichtet ist, einen Betrieb des unbemannten Inspektionsfluggeräts zu steuern;
wobei das Inspektionsfluggerät zum Ausführen eines Inspektionsflugs zum Inspizieren eines Objekts für Folgendes eingerichtet ist:
- Erfassen von Bilddaten für ein Objekt mittels der Kameraeinrichtung (1), die an einem unbemannten Fluggerät angeordnet ist und die eine Lidar-Messeinrichtung, Time-of-Flight-Messeinrichtung und/oder Radar-Messeinrichtung umfasst, während einer ersten Flugbewegung des unbemannten Fluggeräts in einem Flugkoordinatensystem in der Nähe des Objekts;
- Erfassen von Tiefendaten mittels der Tiefensensoreinrichtung (2), die an dem unbemannten Fluggerät angeordnet ist, wobei die Tiefendaten Abstände zwischen dem unbemannten Fluggerät und dem Objekt während der ersten Flugbewegung anzeigen;
- Verarbeiten der Bilddaten und der Tiefendaten mittels der Auswerteeinrichtung (8), aufweisend:
- Ausführen einer auf künstlicher Intelligenz basierenden Bildanalyse für die Bilddaten, wobei hierbei aus den Bilddaten mit Hilfe von auf künstlicher Intelligenz basierender Bilderkennung das Objekt erkannt wird und für Bildpixel, die dem erkannten Objekt zugeordnet werden, Pixelkoordinaten in einem Kamerakoordinatensystem der Kameraeinrichtung (1) bestimmt werden;
- Ausführen einer Sensordatenfusion für die Bilddaten und die Tiefendaten, wobei hierbei den Bildpixeln des Objekts jeweils zuordenbaren Tiefendaten bestimmt werden und aus den zugeordneten Tiefendaten mindestens einen Objektbezugspunkt für das Objekt bestimmt wird; und
- Bestimmen von Positionskoordinaten für den mindestens einen Objektbezugspunkt, wobei die Positionskoordinaten eine Position des Objekts in dem Flugkoordinatensystem anzeigen;
- Bestimmen von Flugbahnkoordinaten für das unbemannte Fluggerät in dem Flugkoordinatensystem für einen in Bezug auf das Objekt kollisionsvermeidenden Inspektionsflug zum Inspizieren des Objekts unter Berücksichtigung der Positionskoordinaten für den mindestens einen Objektbezugspunkt; und
- Steuern des unbemannten Fluggeräts während einer zweiten Flugbewegung, derart, dass das unbemannte Fluggerät hierbei den kollisionsvermeidenden Inspektionsflug den Flugbahnkoordinaten entsprechend ausführt, durch die Steuereinrichtung (9) des unbemannten Fluggeräts.

## Claims

1. Method for controlling an inspection flight of an unmanned aircraft for inspecting of an object, with:
- Acquisition of image data for an object by means of a camera device (1), which is arranged on an unmanned aircraft, during a first flight movement of the unmanned aircraft in a flight coordinate system in the vicinity of the object;
- Acquisition of depth data by means of a depth sensor device (2), which is arranged on the unmanned aircraft, and which comprises a lidar measuring device, a time-of-flight measuring device, and/or a radar measuring device, wherein the depth data display distances between the unmanned aircraft and the object during the first flight movement;
- Processing of the image data and the depth data by means of an evaluation device (8), comprising:
- Execution of an image analysis based on artificial intelligence for the image data, wherein thereby the object is recognised from the image data, with the aid of image recognition based on artificial intelligence, and pixel coordinates are determined in a camera coordinate system of the camera device (1) for image pixels that are assigned to the recognised object;
- Execution of a sensor data fusion for the image data and the depth data, wherein thereby the depth data that can be assigned to the image pixels of the object are respectively determined, and from the assigned depth data at least one object reference point for the object is determined; and
- Determination of position coordinates for the at least one object reference point in the flight coordinate system, wherein the position coordinates indicate a position of the object in the flight coordinates system;
- Determination of flight trajectory coordinates for the unmanned aircraft for a collision
- avoiding inspection flight with reference to the object for inspecting the object, taking into account the position coordinates for the at least one object reference point; and
- Control of the unmanned aircraft during a second flight movement, such that the unmanned aircraft thereby performs the collision-avoiding inspection flight in accordance with the flight trajectory coordinates, by means of a control device (9) of the unmanned aircraft.

2. Method in accordance with Claim 1, **characterised in that** the at least one object reference point is determined in accordance with an object point of the object, for which a mean distance between the unmanned aircraft and the object is determined from the associated depth data.

3. Method in accordance with Claim 1 or 2, **characterised in that** in the course of processing the image data and/or the depth data, a three-dimensional model for the object is determined.

4. Method in accordance with Claim 3, **characterised in that** the determination of the three-dimensional model for the object is at least initiated during the first flight movement.

5. Method in accordance with Claim 3 or 4, **characterised in that** the determination of the three-dimensional model for the object is executed at least partially during the second flight movement.

6. Method in accordance with at least one of the Claims 3 to 5, **characterised in that** the three-dimensional model for the object is determined in real time during the execution of the first and/or the second flight movement by the unmanned aircraft.

7. Method in accordance with at least one of the Claims 3 to 6, **characterised in that** at least one of the following steps is provided:
- Determination of the flight trajectory coordinates, taking into account the three-dimensional model for the object; and
- Determination of updated flight trajectory coordinates, taking into account the three-dimensional model for the object based on the flight trajectory coordinates during the collision-avoiding inspection flight.

8. Method in accordance with at least one of the preceding claims, **characterised in that** the following are provided in the course of the determination of the position coordinates for the at least one object reference point:
- Acquisition of inertial measurement data by means of an inertial measurement device (3), which is arranged on the unmanned aircraft;
- Acquisition of position data by means of a position determination device (4), which is arranged on the unmanned aircraft, wherein the position data indicate a position of the unmanned aircraft in the flight coordinates system; and
- Determination of the position coordinates for the at least one object reference point, based on the inertial measurement data and the position data.

9. Unmanned inspection aircraft, with
- a camera device (1);
- a depth sensor device (2);
- an evaluation device (8), which has one or a plurality of processors configured for data processing; and
- a control device (9), which is configured to control an operation of the unmanned inspection aircraft;
wherein the inspection aircraft is configured to execute an inspection flight for inspecting an object for the following:
- Acquisition of image data for an object by means of the camera device (1), which is arranged on an unmanned aircraft, and which comprises a lidar measuring device, a time-of-flight measuring device, and/or a radar measuring device, in the course of a first flight movement of the unmanned aircraft in a flight coordinates system in the vicinity of the object;
- Acquisition of depth data by means of the depth sensor device (2), which is arranged on the unmanned aircraft, wherein the depth data indicate distances between the unmanned aircraft and the object during the first flight movement;
- Processing of the image data and the depth data by means of the evaluation device (8), comprising:
- Execution of an image analysis based on artificial intelligence for the image data, wherein thereby the object is recognised from the image data with the aid of image recognition based on artificial intelligence and pixel coordinates in a camera coordinate system of the camera device (1) are determined for image pixels which are assigned to the recognised object;
- Execution of a sensor data fusion for the image data and the depth data, wherein thereby the depth data respectively assignable to the image pixels of the object are determined, and at least one object reference point for the object is determined from the assigned depth data; and
- Determination of position coordinates for the at least one object reference point, wherein the position coordinates indicate a position of the object in the flight coordinate system;
- Determination of flight trajectory coordinates for the unmanned aircraft in the flight coordinate system for a collision-avoiding inspection flight with respect to the object, for inspecting the object, taking into account the position coordinates for the at least one object reference point; and
- Control of the unmanned aircraft during a second flight movement, such that the unmanned aircraft thereby performs the collision-avoiding inspection flight in accordance with the flight path coordinates, by means of the control device (9) of the unmanned aircraft.

## Revendications

1. Procédé de commande d'un vol d'inspection d'un véhicule aérien sans pilote pour inspecter un objet, comportant
- l'acquisition des données d'image pour un objet au moyen d'un dispositif de caméra (1), qui est disposé sur un véhicule aérien sans pilote, pendant un premier mouvement de vol du véhicule aérien sans pilote dans un système de coordonnées de vol à proximité de l'objet ;
- l'acquisition de données de profondeur au moyen d'un dispositif de capteur de profondeur (2) qui est disposé sur le véhicule aérien sans pilote et qui comprend un dispositif de mesure lidar, un dispositif de mesure du temps de vol et/ou un dispositif de mesure radar, dans lequel les données de profondeur affichent des distances entre le véhicule aérien sans pilote et l'objet pendant le premier mouvement de vol ;
- le traitement des données d'image et des données de profondeur au moyen d'un dispositif d'évaluation (8), comprenant :
- l'exécution d'une analyse d'image basée sur l'intelligence artificielle pour les données d'image, dans lequel l'objet est reconnu dans ce cadre à partir des données d'image à l'aide d'une reconnaissance d'image basée sur l'intelligence artificielle et pour les pixels d'image, qui sont attribués à l'objet reconnu, des coordonnées de pixels sont déterminées dans un système de coordonnées de caméra du dispositif de caméra (1) ;
- l'exécution d'une fusion de données de capteur pour les données d'image et les données de profondeur, dans lequel dans ce cadre des données de profondeur qui peuvent être attribuées aux pixels d'image de l'objet sont déterminées et au moins un point de référence d'objet pour l'objet est déterminé à partir des données de profondeur attribuées ; et
- la détermination des coordonnées de position pour au moins un point de référence d'objet dans le système de coordonnées de vol, dans lequel les coordonnées de position indiquent une position de l'objet dans le système de coordonnées de vol ;
- la détermination des coordonnées de trajectoire de vol pour le véhicule aérien sans pilote pour un vol d'inspection qui évite une collision par rapport à l'objet pour inspecter l'objet, en tenant compte des coordonnées de position pour au moins un point de référence d'objet ; et
- la commande du véhicule aérien sans pilote pendant un deuxième mouvement de vol, de telle sorte que le véhicule aérien sans pilote exécute dans ce cadre le vol d'inspection évitant les collisions conformément aux coordonnées de trajectoire de vol, au moyen d'un dispositif de commande (9) du véhicule aérien sans pilote.

2. Procédé selon la revendication 1, **caractérisé en ce que** le au moins un point de référence d'objet est déterminé de manière à correspondre à un point d'objet de l'objet, pour lequel une distance moyenne entre le véhicule aérien sans pilote et l'objet est déterminée à partir des données de profondeur attribuées.

3. Procédé selon la revendication 1 ou 2, **caractérisé en ce que** lors du traitement des données d'image et/ou des données de profondeur, un modèle tridimensionnel pour l'objet est déterminé.

4. Procédé selon la revendication 3, **caractérisé en ce que** la détermination du modèle tridimensionnel de l'objet est démarrée au moins lors du premier mouvement de vol.

5. Procédé selon la revendication 3 ou 4, **caractérisé en ce que** la détermination du modèle tridimensionnel de l'objet est réalisée au moins partiellement lors du deuxième mouvement de vol.

6. Procédé selon au moins une des revendications 3 à 5, **caractérisé en ce que** le modèle tridimensionnel de l'objet est déterminé en temps réel lors de l'exécution du premier et/ou du deuxième mouvement de vol par le véhicule aérien sans pilote.

7. Procédé selon au moins une des revendications 3 à 6, **caractérisé en ce qu'**au moins une des étapes suivantes est prévue :
- la détermination des coordonnées de trajectoire en tenant compte du modèle tridimensionnel de l'objet; et
- la détermination des coordonnées de trajectoire mises à jour en tenant compte du modèle tridimensionnel de l'objet sur la base des coordonnées de trajectoire pendant le vol d'inspection évitant les collisions.

8. Procédé selon au moins une des revendications précédentes, **caractérisé en ce qu'**on prévoit, lors de la détermination des coordonnées de position du au moins un point de référence d'objet :
- l'acquisition des données de mesure inertielle au moyen d'un dispositif de mesure inertielle (3) disposé sur le véhicule aérien sans pilote ;
- l'acquisition des données de position au moyen d'un dispositif de détermination de position (4) disposé sur le véhicule aérien sans pilote, dans lequel les données de position indiquent une position du véhicule aérien sans pilote dans le système de coordonnées de vol ; et
- la détermination des coordonnées de position pour au moins un point de référence d'objet sur la base des données de mesure inertielle et des données de position.

9. Véhicule aérien d'inspection sans pilote, doté de
- un dispositif de caméra (1) ;
- un dispositif de capteur de profondeur (2) ;
- un dispositif d'évaluation (8), qui présente un ou plusieurs processeurs configurés pour le traitement des données ; et
- un dispositif de commande (9) qui est configuré pour commander le fonctionnement du véhicule aérien d'inspection sans pilote ;
dans lequel le véhicule aérien d'inspection est conçu pour exécuter un vol d'inspection afin d'inspecter un objet pour ce qui suit:
- l'acquisition de données d'image pour un objet au moyen du dispositif de caméra (1), qui est disposé sur un véhicule aérien sans pilote et qui comprend un dispositif de mesure lidar, un dispositif de mesure du temps de vol et/ou un dispositif de mesure radar, pendant un premier mouvement de vol du véhicule aérien sans pilote dans un système de coordonnées de vol à proximité de l'objet;
- l'acquisition des données de profondeur au moyen du dispositif de capteur de profondeur (2) disposé sur le véhicule aérien sans pilote, dans lequel les données de profondeur indiquent les distances entre le véhicule aérien sans pilote et l'objet pendant le premier mouvement de vol ;
- le traitement des données d'image et des données de profondeur au moyen du dispositif d'évaluation (8), comprenant :
- l'exécution d'une analyse d'image basée sur l'intelligence artificielle pour les données d'image, dans lequel dans ce cadre l'objet est reconnu à partir des données d'image à l'aide d'une reconnaissance d'image basée sur l'intelligence artificielle et la détermination de coordonnées de pixels pour des pixels d'image qui sont affectés à l'objet reconnu dans un système de coordonnées de caméra du dispositif de caméra (1) ;
- l'exécution d'une fusion de données de capteur pour les données d'image et les données de profondeur, dans lequel dans ce cadre des données de profondeur qui peuvent être attribuées aux pixels d'image de l'objet sont déterminées et au moins un point de référence d'objet de l'objet est déterminé à partir des données de profondeur attribuées ; et
- la détermination des coordonnées de position pour au moins un point de référence d'objet, dans lequel les coordonnées de position indiquent une position de l'objet dans le système de coordonnées de vol ;
- la détermination des coordonnées de trajectoire de vol pour le véhicule aérien sans pilote dans le système de coordonnées de vol pour un vol d'inspection évitant les collisions par rapport à l'objet pour inspecter l'objet, en tenant compte des coordonnées de position pour au moins un point de référence d'objet ; et
- la commande du véhicule aérien sans pilote pendant un deuxième mouvement de vol, de telle sorte que dans ce cadre le véhicule aérien sans pilote exécute le vol d'inspection évitant les collisions conformément aux coordonnées de trajectoire de vol, par le dispositif de commande (9) du véhicule aérien sans pilote.
